# DEMANDE DE BREVET EUROPEEN

(11) **EP 2 502 792 A1**
(43) Date de publication de la demande: **26.09.2012**
(21) Numéro de dépôt: 12158436.1
(22) Date de dépôt: 07.03.2012
(51) Int. Cl.: B60R 21/02

(54) **Cloison modulable d'un vehicule automobile et procede de configuration d'un espace de rangement**

(30) Priorité: 24.03.2011 FR 1152436
(71) Demandeur: Peugeot Citroën Automobiles SA, 78140 Vélizy Villacoublay (FR)
(72) Inventeur: Rebel, Vincent M., 75010 Paris (FR)

(57) **Abrégé**

L'invention concerne une cloison modulable (C) de véhicule automobile comportant une partie mobile (CM) pouvant dans une première configuration servir de cloison d'habitacle sans rangement et dans une seconde configuration offrir un volume de rangement volumineux dans l'habitacle. La cloison comprend des panneaux mobiles (PMI, PMM, PMS) articulés pouvant former une cloison verticale ou une cloison avec une cavité de rangement. L'invention s'applique aux véhicules automobiles et plus particulièrement les véhicules utilitaires.

## Description

L'invention concerne une cloison modulable arrière d'un habitacle de véhicule automobile et un procédé de configuration d'une cavité de rangement dans l'habitacle au moyen de la dite cloison modulable.

L'invention vise à améliorer la capacité de rangement de l'habitacle d'un véhicule automobile, notamment un véhicule utilitaire.

On connaît de l'état de la technique le brevet américain US6474713B1 divulguant une cloison de l'habitacle d'un véhicule utilitaire modulable. La cloison arrière de l'habitacle peut être mobile de sorte à offrir un volume d'habitacle supérieur par pivotement vers l'arrière du véhicule ou un volume de chargement supérieur par déplacement de la cloison vers l'intérieur de l'habitacle. Cette solution augmente le volume de place pour les occupants du véhicule mais ne permet pas de ranger des objets volumineux tels que des colis ou des vêtements de sorte qu'ils soient à portée de main.

Il existe également sur certains véhicules utilitaires des rangements positionnés sous le pavillon au dessus du pare-brise. Cependant, le problème de ces derniers rangements est qu'ils sont disponibles uniquement sur les petits véhicules utilitaires. En effet, sur les plus gros véhicules où le conducteur et le plancher de la cabine sont surélevés au maximum pour des raisons d'architecture, il n'est pas possible d'implanter un tel rangement.

L'invention vise à améliorer la capacité de rangement de l'habitacle d'un véhicule automobile.

A cet effet, l'invention a pour objet une cloison modulable arrière d'un habitacle de véhicule automobile comportant une partie verticale fixe comprenant un évidement. Selon l'invention, la cloison comprend également une partie mobile composée d'une pluralité de panneaux mobiles articulés entre eux, la partie mobile de la cloison étant apte à occuper une première configuration dans laquelle au moins un panneau est positionné de sorte à obturer l'évidement de la partie fixe de la cloison, et une seconde configuration dans laquelle les panneaux mobiles et la partie verticale fixe de la cloison sont agencés de sorte à former une cavité de rangement ayant un volume de parallélépipède, la dite cavité étant accessible à travers l'évidement de la partie verticale fixe de la cloison.

Selon l'invention, la partie mobile est composée de trois panneaux articulés en rotation, un panneau inférieur étant monté en rotation autour d'un premier axe transversal positionné sensiblement à hauteur de la partie inférieure de l'évidement, un panneau supérieur étant monté en rotation autour d'un second axe transversal positionné sensiblement à hauteur de la partie supérieure de l'évidement et un panneau central étant couplé en rotation au panneau inférieur et au panneau supérieur selon un troisième et un quatrième axe transversal respectivement positionnés sensiblement entre les premier et second axes transversaux.

Selon l'invention, dans la première configuration et dans la seconde configuration les panneaux de la partie mobile de la cloison sont configurés de sorte à former une figure en L.

Selon l'invention, une face d'un panneau de la partie mobile de la cloison est destinée à servir de surface de support pour un objet lorsque la partie mobile de la cloison est dans la seconde configuration.

Préférentiellement, elle comprend un moyen de verrouillage pour maintenir les panneaux de la partie mobile de la cloison dans la première configuration et lorsque le moyen de verrouillage est déverrouillé la partie mobile de la cloison se déplace de la première configuration à la seconde configuration par l'action de la force de gravité sur la partie mobile.

Préférentiellement, l'invention comprend une poignée de saisie permettant de déplacer la partie mobile de la cloison entre la première configuration et la seconde configuration.

Selon un mode de réalisation, un panneau de la partie mobile de la cloison comporte une zone transparente.

Selon un mode de réalisation, la surface d'évidement de la partie fixe de la cloison est inférieure à la surface des panneaux de la partie mobile de la cloison.

Selon un mode de réalisation, la cloison comporte des joues positionnées de sorte à empêcher le déplacement d'un objet placé dans la cavité de rangement lorsque la partie mobile de la cloison est dans la seconde configuration.

L'invention concerne également le procédé de configuration d'une cavité de rangement dans un véhicule automobile comprenant une cloison modulable selon l'une quelconque des variantes de réalisation précédentes. Il comprend les étapes suivantes :
- Une première étape de maintien des panneaux de la partie mobile de la cloison modulable dans une première configuration formant une figure de L dont un panneau vertical obture l'évidement de la partie verticale fixe de la cloison,
- Une seconde étape de déverrouillage de la partie mobile de la cloison,
- Une troisième étape de déplacement des panneaux mobiles sous l'effet de la force de gravité pour atteindre une seconde configuration dans laquelle les panneaux mobiles et la partie verticale fixe de la cloison sont agencés de sorte à former une cavité de rangement ayant un volume de parallélépipède, la dite cavité étant accessible à travers l'évidement de la partie verticale fixe de la cloison.

Grâce à l'invention, il est possible de disposer pour les occupants du véhicule d'un espace de rangement volumineux dans l'habitacle pouvant s'étendre sur toute la largeur du véhicule et sur une grande partie en hauteur. Ainsi, le conducteur ou ses passagers peuvent poser des objets de grande taille comme des colis, des parapluies ou des costumes suspendus à un cintre.

Par ailleurs, ce volume de rangement est aménageable selon les besoins des occupants selon une manipulation simple de déverrouillage de la cloison. Ensuite, la partie mobile de la cloison se déploie sous l'effet de la gravité.

De plus grâce à l'invention, lorsque le conducteur n'a pas la nécessité d'avoir ce volume de rangement dans l'habitacle et qu'il souhaite disposer d'un volume de chargement maximum à l'arrière, la partie mobile de la cloison peut être configurée pour ne pas empiéter sur le volume de chargement.

L'invention sera mieux comprise et d'autres avantages apparaîtront à la lecture de la description détaillée d'un mode de réalisation donné à titre d'exemple, description illustrée par le dessin joint dans lequel :
- la figure 1 est une vue en perspective de la cloison modulable selon l'invention à l'arrière de l'habitacle d'un véhicule utilitaire lorsque la partie mobile de la cloison est verrouillée.
- La figure 2 est une vue en perspective de la cloison modulable selon l'invention à l'arrière de l'habitacle d'un véhicule utilitaire lorsque la partie mobile de la cloison est déverrouillée. Une cavité de rangement pour l'habitacle est alors disponible.
- La figure 3 est une vue de côté de la cloison modulable représentant la partie mobile selon deux configurations et dans une configuration intermédiaire.
- La figure 4 est une vue de côté de la cloison modulable lorsque la cavité de rangement est configurée dans laquelle sont placés un paquet et des vêtements.

Par souci de clarté, les mêmes éléments porteront les mêmes repères dans les différentes figures.

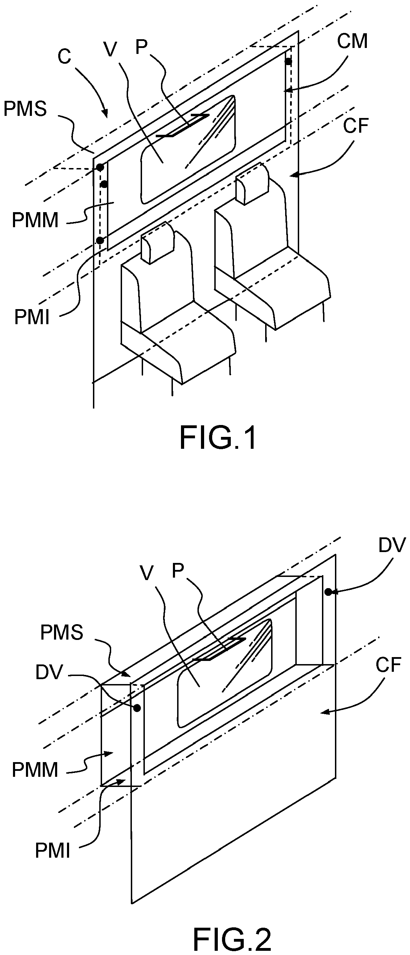

La figure 1 représente un habitacle d'un véhicule utilitaire. L'habitacle est une cabine de conduite où sont placés deux sièges, un pour le conducteur et un pour un passager. L'habitacle est délimité par une cloison positionnée derrière les deux sièges. La cloison comprend une partie fixe verticale CF et une partie mobile CM.

La partie fixe CF est fixée au plancher du véhicule sur sa partie inférieure et est fixée au pavillon du véhicule sur sa partie supérieure. La partie fixe verticale CF s'étend sur toute la largeur et la hauteur de l'habitacle du véhicule pour séparer intégralement l'habitacle du volume de chargement à l'arrière du véhicule. Selon l'invention, la partie fixe CF comprend un évidement E. Cet évidement s'étend préférentiellement sur une majeure partie de la largeur de l'habitacle et sur la seconde moitié de la hauteur de la partie fixe, c'est-à-dire à une hauteur positionnée sensiblement entre la tête du siège et une hauteur proche du pavillon. Toutefois, d'autres positions et dimensions de l'évidement sont possibles. Préférentiellement, l'évidement est dimensionné de sorte qu'il reste un cadre de la partie fixe autour de l'évidement. Ce cadre permet d'empêcher les objets de sortir de la cavité de rangement formée par la partie mobile CM.

La partie mobile CM est articulée et comprend trois panneaux mobiles PMS, PMM et PMI. Le panneau supérieur PMS est positionné à hauteur de la partie supérieure de l'évidement E et est couplé au pavillon du véhicule, le panneau inférieur PMI est positionné à hauteur de la partie inférieure de l'évidement E et couplé sur la partie fixe CF en dessous de l'évidement et le panneau central PMM est couplé au panneau supérieur PMS et au panneau inférieur PMI. La partie mobile est fixée sur la partie fixe de la cloison par le panneau inférieur du côté du volume de chargement du véhicule. La partie mobile se déplace à l'intérieur du volume de chargement.

Selon la figure 1, la partie mobile CM comprend également une vitre V sur le panneau central PMM permettant au conducteur de voir à travers la cloison, mais la présence de la vitre n'est pas obligatoire. La partie mobile CM comprend également une poignée P permettant de saisir la partie mobile CM pour déplacer la partie mobile selon une configuration verrouillée à une configuration dans laquelle une cavité de rangement est formée. Pour cela, la cloison comprend un moyen de verrouillage DV de la cloison permettant de maintenir la partie mobile CM plaquée contre la partie fixe CF. Ce moyen de verrouillage peut être à titre d'exemple non limitatif de type quart de tour, loquet ou aimant.

Selon la figure 1, la partie mobile de la cloison est positionnée dans la configuration verrouillée, c'est à dire que la partie mobile CM est plaquée contre la partie fixe de sorte à obturer l'évidement E de la partie fixe CF. Dans cette configuration, le moyen de verrouillage DV est actif et la poignée P est accessible de l'habitacle. Le volume de chargement à l'arrière du véhicule est séparé de l'habitacle. Préférentiellement, la cloison comprend des joues autour de l'évidement positionnées sur la partie fixe autour de l'évidement et/ou sur la partie mobile sur les zones en regard des bords de l'évidement. Ces joues permettent d'isoler acoustiquement et/ou thermiquement l'habitacle du volume de chargement. Les joues peuvent être souples (dans un matériau de type néoprène, matière plastique, tissu) ou rigides (matériau plastique par exemple).

Dans cette configuration verrouillée, le panneau central PMM et le panneau inférieur PMI obturent ensemble l'évidement E, tandis que le panneau supérieur est plaqué contre le pavillon du véhicule. Ainsi, la partie mobile CM forme un L retourné où la branche verticale du L, composée du panneau inférieur PMI et du panneau central PMM, ferme l'évidement, et où la branche horizontale du L plaquée sur le pavillon, composée du panneau supérieur PMS, s'étend vers l'intérieur du volume de chargement.

La figure 2 représente la même cloison que cette de la figure 1 cette fois positionnée dans la configuration déverrouillée. Selon l'invention dans cette configuration, le panneau inférieur PMI est positionné à l'horizontal et s'étend vers l'intérieur du volume de chargement. Une surface horizontale est ainsi formée entre la cloison fixe CF et le panneau central PMM à une hauteur de la partie inférieure de l'évidement. Le panneau central PMM et le panneau supérieur PMS sont positionnés à la verticale. Ces deux derniers panneaux sont écartés de la partie fixe verticale de la cloison selon une distance correspondant à la largeur du panneau inférieur PMI. Dans cette configuration, la partie mobile CM forme une figure en L à l'endroit formant ainsi une cavité de rangement accessible par l'évidement E depuis l'habitacle. La cavité de rangement est délimitée dans la largeur du véhicule par la longueur des panneaux mobiles, cette longueur s'étend selon un axe transversal, dans la profondeur par la largeur du panneau inférieur et du panneau supérieur PMI et PMS et dans la hauteur, par la largeur du panneau central et du panneau supérieur PMM et PMS. Dans le mode de réalisation préférentiel, les dimensions des panneaux sont supérieures à celles de l'évidement. Cet écart permet d'obtenir des rebords pour empêcher les objets de sortir de la cavité de rangement.

L'avantage de cette cavité de rangement est qu'elle présente un volume en largeur et hauteur maximum ce qui permet de poser des objets volumineux et directement accessibles depuis l'habitacle pour le conducteur ou son passager. Le volume de la cavité de rangement est de forme parallélépipédique et est délimité par dans le fond par les panneaux mobiles de la partie mobile de la cloison et devant par la partie verticale fixe de la cloison. La cavité de rangement est accessible par l'évidement de la partie fixe. Lorsque la cavité de rangement n'est pas utilisée, le conducteur peut utiliser la poignée P pour passer de la configuration de rangement à la configuration de verrouillage très rapidement. Le conducteur peut ainsi exploiter l'intégralité de son volume de chargement à l'arrière du véhicule.

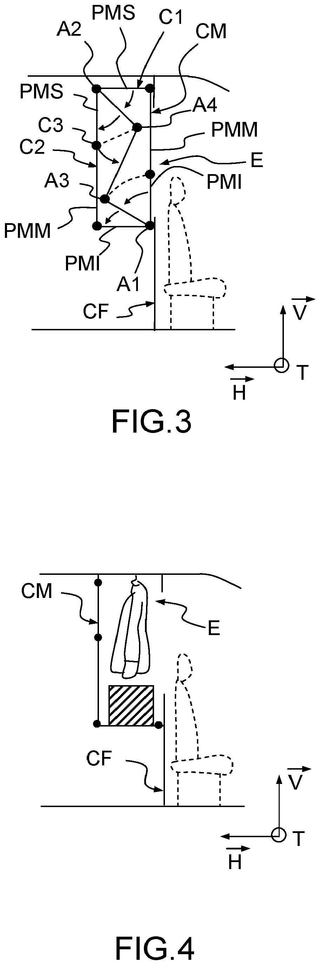

La figure 3 représente un schéma de la cinématique de la partie mobile CM de la cloison. L'espace dans les figures 3 et 4 est référencé en horizontal par l'axe H, en vertical par l'axe V et en transversal par l'axe T. La figure représente la partie mobile CM dans une première configuration C1 correspondant à la position de verrouillage, dans une seconde configuration C2 correspondant à la position de rangement et dans une troisième configuration intermédiaire C3 correspondant à une position de passage de la première configuration C1 à la seconde configuration C2. La partie mobile CM de la cloison est composée des trois panneaux PMI, PMM et PMS.

Le panneau supérieur est couplé au pavillon du véhicule à une distance de la cloison fixe correspondant à la largeur du panneau supérieur. Le couplage est réalisé par une liaison en rotation A2 autour de l'axe transversal T s'étendant dans la largeur du véhicule, c'est à dire entre le côté gauche et le côté droit du véhicule. La liaison est positionnée dans une zone au dessus de l'évidement E.

Le panneau inférieur PMI est couplé à la cloison fixe CF en dessous de la zone de l'évidement E. De même que pour le panneau supérieur, le couplage est réalisé par une liaison en rotation A1 autour de l'axe transversal s'étendant dans la largeur du véhicule. La liaison est positionnée dans une zone en dessous de l'évidement E.

Le panneau central PMM est couplé d'une part avec le panneau supérieur PMS et d'autre part avec le panneau inférieur PMI. Les deux couplages sont réalisés par une liaison en rotation A4 et A3 respectivement autour de l'axe transversal s'étendant dans la largeur du véhicule. La liaison A4 est positionnée au niveau de la hauteur de la liaison A2 et la liaison A3 est positionnée au dessus de la liaison A1 dans la configuration verrouillée C1. La liaison A4 est positionnée en dessous de la liaison A2 et la liaison A3 est positionnée au niveau de la hauteur de la liaison A1 dans la configuration de rangement C2.

Grâce à ces liaisons A1, A2, A3 et A4 en rotation, la partie mobile CM peut prendre la forme d'un L dans les positions de verrouillage C1 et de rangement C2 et la forme d'un accordéon dans les positions intermédiaires C3. Les liaisons A1 et A2 sont fixes tandis que les liaisons A3 et A4 sont mobiles.

La figure 4 représente la cloison et la partie mobile CM dans la configuration de rangement. Un objet volumineux et des vêtements sont placés dans la cavité de rangement. Préférentiellement, des joues placées sur les panneaux de la partie mobile servent à empêcher le déplacement des objets à l'intérieur de la cavité de rangement.

Grâce à l'invention, la cavité de rangement peut être soit non déployée et le volume de chargement à l'arrière du véhicule est maximal, soit déployée et le volume de rangement dans l'habitacle est augmenté de façon conséquente. La cavité de rangement peut se déployée automatiquement, lorsque le moyen de verrouillage DV est débloqué, sous l'effet de la force de gravité sur les panneaux mobiles PMI, PMM et PMS de la partie mobile CM de la cloison C. Lorsque la partie mobile est positionnée dans une forme de L dont la branche verticale obture l'évidement, suite au déverrouillage, les panneaux mobiles se déplacent grâce à la cinématique formée par les articulations A1, A2, A3 et A4 dans une configuration en L retournée par rapport à la première configuration dans laquelle le panneau inférieur forme un panneau de support d'objet et les panneaux central et supérieur délimitent le fond de la cavité. Selon un autre mode de réalisation, les panneaux se déplacent uniquement sous l'effet d'une action d'un occupant sur la poignée P.

L'invention s'applique aux cloisons d'habitacle pour véhicule automobile et préférentiellement pour les véhicules utilitaires.

## Revendications

1. Cloison modulable (C) arrière d'un habitacle de véhicule automobile comportant une partie verticale fixe (CF) comprenant un évidement (E), **caractérisée en ce qu'**elle comprend également une partie mobile (CM) composée d'une pluralité de panneaux mobiles (PMI, PMM, PMS) articulés entre eux, la partie mobile de la cloison étant apte à occuper :
- une première configuration (C1) dans laquelle au moins un panneau (PMM) est positionné de sorte à obturer l'évidement (E) de la partie fixe (CF) de la cloison,
- et une seconde configuration (C2) dans laquelle les panneaux mobiles (PMI, PMM, PMS) et la partie verticale fixe (CF) de la cloison sont agencés de sorte à former une cavité de rangement ayant un volume de parallélépipède, la dite cavité étant accessible à travers l'évidement (E) de la partie verticale fixe (CF) de la cloison (C).

2. Cloison modulable selon la revendication 1, **caractérisée en ce que** la partie mobile (CM) est composée de trois panneaux articulés (PMI, PMM, PMS) en rotation, un panneau inférieur (PMI) étant monté en rotation autour d'un premier axe transversal (A1) positionné sensiblement à hauteur de la partie inférieure de l'évidement (E), un panneau supérieur (PMS) étant monté en rotation autour d'un second axe transversal (A2) positionné sensiblement à hauteur de la partie supérieure de l'évidement (E) et un panneau central (PMM) étant couplé en rotation au panneau inférieur (PMI) et au panneau supérieur (PMS) selon un troisième (A3) et un quatrième (A4) axe transversal respectivement, positionnés sensiblement entre les premier et second axes transversaux (A1, A2).

3. Cloison modulable selon l'une quelconque des revendications précédentes, **caractérisée en ce que** dans la première configuration (C1) et dans la seconde configuration (C2) les panneaux de la partie mobile (CM) de la cloison sont configurés de sorte à former une figure en L.

4. Cloison modulable selon l'une quelconque des revendications précédentes, **caractérisée en ce qu**'une face d'un panneau (PMI) de la partie mobile de la cloison est destinée à servir de surface de support pour un objet lorsque la partie mobile (CM) de la cloison est dans la seconde configuration (C2).

5. Cloison modulable selon l'une quelconque des revendications précédentes, **caractérisée en ce qu**'elle comprend un moyen de verrouillage (DV) pour maintenir les panneaux de la partie mobile de la cloison dans la première configuration (C1) et lorsque le moyen de verrouillage (DV) est déverrouillé la partie mobile (CM) de la cloison se déplace de la première configuration (C1) à la seconde configuration (C2) par l'action de la force de gravité sur la partie mobile (CM).

6. Cloison modulable selon l'une quelconque des revendications précédentes, **caractérisée en ce qu**'elle comprend une poignée de saisie (P) permettant de déplacer la partie mobile de la cloison entre la première configuration et la seconde configuration.

7. Cloison modulable selon l'une quelconque des revendications précédentes, **caractérisée en ce qu**'un panneau de la partie mobile de la cloison comporte une zone transparente (V).

8. Cloison modulable selon l'une quelconque des revendications précédentes, **caractérisée en ce que** la surface d'évidement (E) de la partie fixe de la cloison est inférieure à la surface des panneaux de la partie mobile de la cloison.

9. Cloison modulable selon l'une quelconque des revendications précédentes, **caractérisée en ce qu**'elle comporte des joues positionnées de sorte à empêcher le déplacement d'un objet placé dans la cavité de rangement lorsque la partie mobile de la cloison est dans la seconde configuration.

10. Procédé de configuration d'une cavité de rangement dans un véhicule automobile comprenant une cloison modulable selon l'une quelconque des revendications précédentes, **caractérisé en ce qu**'il comprend les étapes suivantes :
- Une première étape de maintien des panneaux de la partie mobile de la cloison modulable dans une première configuration formant une figure de L dont un panneau vertical obture l'évidement de la partie verticale fixe de la cloison,
- Une seconde étape de déverrouillage de la partie mobile de la cloison,
- Une troisième étape de déplacement des panneaux mobiles sous l'effet de la force de gravité pour atteindre une seconde configuration dans laquelle les panneaux mobiles et la partie verticale fixe de la cloison sont agencés de sorte à former une cavité de rangement ayant un volume de parallélépipède, la dite cavité étant accessible à travers l'évidement de la partie verticale fixe de la cloison.
